# EUROPÄISCHE PATENTANMELDUNG

(11) **EP 3 143 960 A1**
(43) Veröffentlichungstag der Anmeldung: **22.03.2017**
(21) Anmeldenummer: 15189317.9
(22) Anmeldetag: 12.10.2015
(51) Int. Cl.: A61C 7/12, A61C 7/28

(54) **BRACKET**

(30) Priorität: 15.09.2015 EP 15185245; 30.09.2015 EP 15187519
(71) Anmelder: Spohr, Ulrich, 34132 Kassel (DE)
(72) Erfinder: Spohr, Ulrich, 34132 Kassel (DE)
(74) Vertreter: Patentanwälte Walther Hinz Bayer PartGmbB

(57) **Zusammenfassung**

Gegenstand der Erfindung ist ein Bracket (10) umfassend einen auf einem Zahn eines Gebisses anordbaren Träger (30) sowie eine auf dem Träger (30) fixierbare Kappe (20), die mindestens einen Schlitz (22, 22a) zur Ausrichtung eines orthodontischen Bogens (50) und/oder eine Einrichtung zur Aufnahme einer Drahtligatur (60) und/oder einer Gummikette aufweist, wobei der mindestens eine Schlitz zum Träger (30) hin offen ist.

## Beschreibung

Die Erfindung betrifft ein Bracket. Brackets werden in der Zahnmedizin (Kieferorthopädie) zur Stellungskorrektur von Zähnen bei Zahn- und Kieferfehlstellungen des Kausystems verwendet.

Solche Brackets bestehen üblicherweise aus einer Basis mit einem sogenannten auf der Basis angeordnetem Schloss. Die Basis ist auf der dem Zahn zugerichteten Seite in zwei Raumrichtungen gewölbt ausgebildet und ist mit Retentionen (Hinterschnitte) versehen, um eine Klebeverbindung mit der Oberfläche des Zahnes eingehen zu können.

Auf der dem Zahn abgewandten Seite der Basis befindet sich das Schloss. Das Schloss nimmt den sogenannten orthodontischen Bogen auf, der zur Erzeugung und Übertragung von orthodontischen Kräften sowie der mechanischen Verbindung der Zähne und Brackets untereinander dient. Der orthodontische Bogen stellt sich üblicherweise als ein im Querschnitt runder oder rechteckiger Draht dar, der im Schloss lagert. Zur Fixierung des orthodontischen Bogens im Schloss dient eine Ligatur aus Gummi oder Draht (Gummikette oder Drahtligatur). Das Schloss weist auf seiner Oberseite entsprechende Hinterschnitte oder Flügel auf, damit die Ligatur am Bracket befestigt werden kann. Die Größe des Schlosses und Abmessungen des orthodontischen Bogens sind aufeinander abgestimmt.

International gebräuchlich sind zwei verschiedene Dimensionen des Schlosses, 0,018 inch und 0,022 inch. Diese Bracketsysteme (genannt 0.18 und 0.22 Technik) unterscheiden sich prinzipiell nur in der Dimension des Schlosses. Die Bogendimensionen für die 0.18 Technik betragen unter Berücksichtigung der Größe des Schlosses max. 0,017" x 0,025", die der 0.22 Technik max. 0,021" x 0,025". Beide Systeme werden weltweit parallel verwendet und weisen spezifische Vor- und Nachteile auf. In erster Linie sind hier die Baugröße und die Höhe der übertragbaren Kräfte in Abhängigkeit von der Dimension des Schlosses zu nennen.

Daneben finden in der Kieferorthopädie sogenannte selbstligierende Brackets (SL-Brackets) Verwendung, bei denen der orthodontische Bogen nicht mit Ligaturen, sondern mit einer in das Bracket integrierten Verschlussmechanik (Klappe, Schieber etc.) im Schloss fixiert wird. Auch diese SL-Brackets sind in der Schlossdimension 0.18 und 0.22 auf dem Markt erhältlich. Selbstligierende Brackets wiederum können konstruktionsbedingt in Abhängigkeit von der Verschlusstechnik aktiv oder passiv selbstligierend sind. Bei aktiv selbstligierenden Brackets wird der orthodontische Bogen z. B. mit einer Feder aktiv bis zum Anschlag in das Schloss gedrückt, bei passiv selbstligierenden Brackets wird lediglich das Schloss in der max. Bogendimension passiv verschlossen. Selbstligierende Brackets haben, gegenüber herkömmlichen nicht selbstligierenden Brackets, den Vorteil, dass die Ligatur (Draht oder Gummi) die Friktion zwischen orthodontischem Bogen und Schloss nicht beeinflusst, d. h. der Bogen gleitet mit deutlich geringerer Reibung im Schloss. Dadurch wird die Zahnbewegung effizienter und die Behandlungszeit verkürzt sich. Außerdem ist es ein Vorteil von selbstligierenden Brackets, dass sich die sogenannte Stuhlzeit, also die Zeit, die der Behandler zum Einligieren des orthodontischen Bogens in das Schloss benötigt, ebenfalls deutlich reduziert.

In der modernen Kieferorthopädie werden alle heutigen Bracketsysteme im Rahmen unterschiedlicher Behandlungsphilosophien verwendet. Diese Behandlungsphilosophien definieren sich über eine spezifische Vorprogrammierung (engl. Prescription), die die Stellung eines jeden Zahnes im Zahnbogen des Ober- und Unterkiefers vorgibt. Diese Vorgaben werden durch die Lage des Schlosses bezogen auf die Hoch-, Längs- und Querachse des Zahnes therapeutisch umgesetzt.

Zwei der weltweit bekanntesten dieser vorprogrammierten Systeme sind die von Roth bzw. die von McLaughlin-Benett-Trevisi (MBT), sie unterscheiden sich zum Teil erheblich in den Werten für Rotation, Torque und Angulation, zudem ändern sich die Werte auch nach neueren wissenschaftlichen Erkenntnissen.

Grundsätzlich erfolgt die Bewegung von Zähnen bei kieferorthopädischen Behandlungen in 3 Richtungen des Raumes:
- Bewegung um die Hochachse = Rotation
   (Achsenrichtung von occlusal nach apikal)
- Bewegung um die Längsachse = Torque
   (Achsenrichtung von mesial nach distal)
- Bewegung um die Querachse = Angulation
   (Achsenrichtung von oral nach vestibulär)

### Hierzu im Einzelnen:

Wie bereits zu eingangs erwähnt, dienen auf den Zähnen angeordnete Brackets, die durch einen orthodonischen Bogen miteinander verbunden sind, dazu, die Zähne relativ zueinander auszurichten. Das heißt, einzelne Brackets können nur im Zusammenspiel mit benachbarten Brackets eine Ausrichtung der Zähne relativ zueinander bewirken. Die Ausrichtung der Zähne kann in Abhängigkeit der Stellung der einzelnen Zähne relativ zueinander auf vielfältige Weise bewirkt werden. So kann es beispielsweise vorkommen, dass Zähne, und dies sei im vorliegenden Fall beispielhaft anhand der Frontzähne erläutert, nicht in einer Ebene stehen, sondern verkippt zueinander im Kiefer stehen. Um solche verkippt zueinanderstehenden Zähn auszurichten, wird eine sogenannte Torque-Beanspruchung auf die Zähne ausgeübt. Das heißt, die Zähne werden um eine in Längsrichtung des Kiefers verlaufende gedachte Achse verschwenkt (oral <> verstibulär).

Darüber hinaus kann es vorkommen, dass die Zähne um eine Achse senkrecht zur Oberseite des jeweiligen Zahnes verdreht im Kiefer angeordnet sind. Im Wege der sogenannten Angulation erfolgt die Ausrichtung der Zähne mit dem Ziel, dass die Seitenkanten (Achsenrichtung) der Zähne im Wesentlichen lotrecht zum Kiefer verlaufen. Mittels solcher Brackets kann auch eine Fehlstellung von Zähnen korrigiert werden, bei der die Zähne hintereinander versetzt zueinander im Kiefer stehen, das heißt, dass beispielsweise in Bezug auf die Frontzähne die Zähne nicht in einer Ebene zueinanderstehen.

Darüber hinaus kann es vorkommen, wie dies bereits an anderer Stelle angedeutet wurde, dass zwischen den einzelnen Zähnen unterschiedliche Abstände bestehen, die mittels der bereits erwähnten Gummikette derart vermittelt werden sollen, dass die Zähne einen im Wesentlichen gleichen Abstand zueinander aufweisen.

Eine weitere Fehlstellung der Zähne zeichnet sich dadurch aus, dass die Zähne in unterschiedlicher Höhe im Kiefer verlaufen. Auch eine solche Fehlstellung kann durch Brackets ausgeglichen werden.

Allen Bracketsystemen (Unterschiede in der Schloss-Dimension, selbstligierend bzw. nicht selbstligierend und Vorprogrammierung) gemeinsam ist jedoch der Nachteil, dass sie prinzipiell untereinander nicht kompatibel sind. Dies bedeutet, dass die jeweiligen Vorteile von unterschiedlichen Schloss-Dimensionen, die jeweiligen Vorteile verschiedener Vorprogrammierungen sowie die Vorteile von selbstligierenden bzw. nicht selbstligierenden Systemen innerhalb eines einzigen Systems nicht miteinander kombiniert werden können.

Ebenso nachteilig bei allen gegenwärtig auf dem Markt verfügbaren Brackets ist, dass diese eine stark zerklüftete Oberflächenstruktur aufweisen. Dort können sich Speisereste und Zahnbeläge ansammeln, die nur schwerlich zu beseitigen sind. Das heißt, solche Brackets beeinträchtigen die Mundhygiene erheblich.

Auch bewirkt die stark zerklüftete Oberfläche der Brackets Irritationen der Mundschleimhaut und stellt für den Patienten eine deutlich sichtbare ästhetische Beeinträchtigung dar.

Darüber hinaus ist die Bauhöhe dieser Brackets relativ groß. Das hat zur Folge, dass beim Kauen und Abbeißen fester, harter Nahrungsmittel derartige Brackets, aufgrund der Kaudruckbelastung und des Abstandes zur Zahnoberfläche, hohen Scherkräften ausgesetzt sind, die zum Lösen der Brackets von der Zahnoberfläche führen können.

Die der Erfindung zugrunde liegende Aufgabe besteht demzufolge darin, hier Abhilfe zu schaffen. Insbesondere soll die Kompatibilität von unterschiedlichen Schloss-Dimensionen sowie die Kompatibilität verschiedener Vorprogrammierungen und Verschlussprinzipien untereinander ermöglicht werden; dies ist mit keinem gegenwärtig auf dem Markt erhältlichen Bracketsystem möglich.

Des Weiteren sollen die Mundhygienemöglichkeiten verbessert und die Haltbarkeit der auf den Zähnen aufgebrachten Brackets erhöht werden, Patientenkomfort und Ästhetik sollen ebenfalls optimiert werden.

Zur Lösung der Aufgabe wird ein zweigeteiltes Bracket vorgeschlagen, das einen auf einem Zahn eines Gebisses zu befestigenden Träger umfasst, sowie einer auf dem Träger fixierbaren Kappe, die mindestens einen vorzugsweise mehrere Schlitze zur Ausrichtung eines orthodontischen Bogens und/oder einer Einrichtung zur Aufnahme einer Ligatur, insbesondere einer Drahtligatur und/oder einer Gummikette aufweist. Der mindestens eine Schlitz ist hierbei in Richtung auf den Träger zu offen, das heißt, er ist im Wesentlichen U-förmig ausgebildet. Hierbei ist eine erste Ausführungsform denkbar, bei der die Kappe zwei einander gegenüberliegende Schlitze oder als zweite Ausführungsform einen vom einen Ende der Kappe zum gegenüberliegenden Ende durchgehenden Schlitz aufweist. In beiden Fällen fungiert der Träger im Wesentlichen ausschließlich als Halterung für die Kappe.

Bei der ersten Ausführungsform sind die Schlitze vorteilhaft beabstandet zueinander im Randbereich der Kappe angeordnet und zwar derart angeordnet, dass der orthodontische Bogen in Richtung der Zahnober- oder Zahnrückseite verläuft. Der Träger besitzt in Bezug auf die erste Ausführungsform vorteilhaft einen Kanal, der in Richtung der Schlitze ausgerichtet ist.

Bei der zweiten Ausführungsform verläuft der durchgehende Schlitz von einem Randbereich zum gegenüberliegenden Randbereich der Kappe und zwar im Wesentlichen parallel zur Ober- oder Rückseite der Zähne.

Durch die auf dem Träger aufsitzenden und beliebig austauschbaren Kappen können nun erstmals jederzeit am Patienten zu verändernde individuell dreidimensional programmierbare Kräfte vom orthodontischen Bogen über den Träger auf den Zahn übertragen werden. Es werden insofern Systemgrenzen überwunden, da nun bei einem bereits im Mund des Patienten an den Zähnen befestigten Bracket verschiedene Schlitz- und Bogen-Dimensionen, Vorprogrammierungen und passiv oder aktiv selbstligierende Verschlusssysteme uneingeschränkt miteinander kombiniert und die Vorteile der jeweiligen Systeme genutzt werden können.

Des Weiteren wird eine im Wesentlichen glatte Oberfläche bereitgestellt, die nicht nur das Ansammeln von Speiseresten sowie Mundschleimhautirritationen erheblich vermindert, sondern darüber hinaus auch optisch insofern ansprechend ist, als die durch die Kappe gebildete Oberfläche nach außen hin im Wesentlichen glatt erscheint. Das heißt, das erfindungsgemäße Bracket verbessert zusätzlich zur Mundhygiene, den Patientenkomfort und die Ästhetik.

Es hat sich als vorteilhaft herausgestellt, dass der orthodontische Bogen durch die Kappe nicht nur in dem Kanal oder dem durchgehenden Schlitz gehalten wird, sondern der orthodontische Bogen durch die Kappe, je nachdem welche Fehlstellung der Zähne korrigiert werden soll, auch unter entsprechende Spannung gestellt wird, die dann über den Träger auf den Zahn übertragen wird. Nach dem Stand der Technik war es bislang so, dass bei den üblichen Brackets der orthodontische Bogen durch eine Ligatur aus Draht (oder Gummi) im Slot gehalten wird. Wenn nun die Drahtligatur nach dem Stand der Technik auch dazu dient, mehrere Zähne miteinander zu verblocken, dann führt dies dazu, dass die Drahtligatur auch die durch den orthodontischen Bogen ausgeübte Kraft auf die Zähne beeinflusst, da hier eine Trennung zwischen Fixierung des Bogens und der Verblockung der Zähne bzw. der Verbindung durch eine Gummikette nicht stattfindet. Eine solche Trennung findet allerdings mit der auf den Träger aufsetzbaren Kappe statt.

Vorteilhaft bei der Kombination eines Brackets aus Kappe und Träger als selbstständige Bauteile ist darüber hinaus, dass die Lage bzw. die Stellung des orthodontischen Bogens durch die Kappe beeinflusst wird und nicht, wie allgemein üblich, durch das Schloss. Mithin ist bei einer gewünschten Veränderung der auf den Zahn ausgeübten Kräfte lediglich der Austausch der Kappe erforderlich.

Somit ist wesentlich, dass Kappe und Träger lösbar miteinander verbindbar sind und jeweils gesonderte Bauteile darstellen. Unter einer Kappe wird insofern ein Bauteil verstanden, dass als gesondertes Bauteil durch den mindestens einen Schlitz bzw. die Stellung des mindestens einen Schlitzes in der Lage ist, über den Träger in Verbindung mit dem orthodontischen Bogen eine Kraft auf den entsprechenden Zahn auszuüben.

Vorteilhafte Merkmale und Ausgestaltungen der Erfindung ergeben sich aus den Unteransprüchen.

So ist insbesondere vorgesehen, dass der Kanal im Träger des Brackets auf den benachbarten Zahn zu ausgerichtet ist. Das heißt, der Kanal hat insofern eine ähnliche Funktion wie der Slot bei einem herkömmlichen Bracket, der der Aufnahme des orthodontischen Bogens dient. Der Kanal dient allerdings nicht dazu, die Ausrichtung der Zähne relativ zueinander zu bewirken.

Der Kanal selbst weist zwei Seitenwände und einen zwischen den Seitenwänden befindlichen Kanalboden auf, wobei vorteilhaft die Wände des Kanals in Richtung des Kanalbodens parallel oder konisch zulaufend ausgebildet sind und der Kanalboden selbst vorzugsweise als ebene Fläche gestaltet ist. Das heißt, wenn der orthodontische Bogen, beispielsweise ein im Querschnitt rechteckförmiger Draht, in dem Kanal einliegt, dann liegt er zumindest mit einer Seite auf dem Kanalboden.

Es wurde bereits darauf hingewiesen, dass die Kappe Schlitze zur Ausrichtung des orthodontischen Bogens aufweist. Im Einzelnen ist in diesem Zusammenhang vorgesehen, dass zur Ausrichtung des orthodontischen Bogens auf der dem Träger zugewandten Seite der Kappe in mindestens zwei einander gegenüberliegende Wandabschnitten jeweils mindestens ein Schlitz angeordnet ist, der der Querschnittsform des orthodontischen Bogens nachempfundenen sein kann. Daraus wird deutlich, dass der jeweilige Schlitz den orthodontischen Bogen im Wesentlichen formschlüssig aufnehmen kann. Das heißt, dass der Schlitz dann, wenn beispielsweise der orthodontische Bogen als Draht einen rechteckförmigen Querschnitt aufweist, die Größe des Schlitzes dem rechteckförmigen Querschnitt des orthodontischen Bogens nachempfunden ist, bzw. anders ausgedrückt zu diesem derart korrespondiert, dass zwischen dem Bogen einerseits und dem Schlitz andererseits eine formschlüssige Verbindung hergestellt werden kann. Das heißt, dass der orthodontische Bogen die Kraft zur Korrektur der Fehlstellung der Zähne über die Kappe auf den Träger überträgt und nicht unmittelbar auf die Basis eines Brackets, wie dies nach dem Stand der Technik der Fall ist. Der Schlitz muss allerdings nicht derart ausgebildet sein, dass er den orthodontischen Bogen formschlüssig aufnimmt; dies kann beispielsweise der Fall sein, wenn hierdurch die Stellung unterschiedlich hoch im Kiefer stehende Zähne korrigiert werden soll. Gleiches gilt sinngemäß, wenn die Kappe zur Aufnahme des orthodontischen Bogens einen durchgehenden Schlitz aufweist.

In Bezug auf die Anordnung der beiden Schlitze in der Kappe kann nach einer ersten Ausführungsform vorgesehen sein, dass die beiden Schlitze seitlich versetzt zueinander in den Wandabschnitten der Kappe angeordnet sind. Dies hat zur Folge, dass der Zahn einer Kraft um die Querachse (Angulation) ausgesetzt ist. Vorteilhaft verläuft hierbei die Laibung der Schlitze entsprechend dem seitlichen Versatz der Schlitze schräg im Wandabschnitt. Nach einer anderen Variante kann vorgesehen sein, dass zumindest einer der beiden Schlitze verschwenkt oder schrägstehend in dem Randabschnitt der Kappe angeordnet ist. Mithilfe einer solchen Kappe kann eine Kraft um die Längsachse des Zahnes ausgeübt werden (Torque). Eine dritte Variante zeichnet sich durch eine Kombination der ersten und der zweiten Variante aus, das heißt, dass der Zahn zur gleichen Zeit sowohl Kräften zur Angulation als auch zum Torque ausgesetzt sein kann. Somit sind dann die beiden Schlitze nicht nur versetzt, also nicht fluchtend zueinander in den Wandabschnitten, sondern zumindest einer der Schlitze auch noch verschwenkt in den jeweiligen Wandabschnitten angeordnet.

Auch bei einem durchgehenden Schlitz in der Kappe kann vorgesehen sein, dass dieser schräg steht oder verschwenkt in der Kappe angeordnet ist. Auch ist eine versetzte Anordnung von Schlitzabschnitten des durchgehenden Schlitzes möglich, ebenfalls mit der Möglichkeit der verschwenkten oder schrägstehenden Anordnung der Schlitzabschnitte. Nun wurde bereits zuvor darauf hingewiesen, dass die Ausrichtung des orthodontischen Bogens durch die Kappe und hier durch den oder die Schlitze in der Kappe erfolgt. Nach einem weiteren Merkmal der Erfindung ist bei der Ausführungsform mit zwei Schlitzen in der Kappe vorgesehen, dass mindestens eine Seitenwand des Kanals, vorzugsweise jedoch jede Seitenwand des Kanals mindestens eine quer zur Längsachse der Seitenwand verlaufende durchgehende Nut aufweist, wobei die vorzugsweise zwei Nuten in den Seitenwänden miteinander fluchten. Die Nuten befinden sich bevorzugt in der Mitte der Seitenwände. Dies vor folgendem Hintergrund. Sind die Zähne unterschiedlich hoch, müssen die Zähne in der Höhe einander angeglichen werden. Dies geschieht dadurch, dass durch den orthodontischen Bogen mithilfe des Brackets auf dem zu den benachbarten Zähnen höher liegenden Zahn dieser Zahn nach unten gezogen wird. Das heißt, dass der orthodontische Bogen bei einem Zahn, der höher liegt als die beiden benachbarten Zähne einen in etwa V-förmigen Verlauf aufweist. Zur Verminderung der Friktion des orthodontischen Bogens in dem Kanal dient die Anordnung der mindestens einen Nut in dem Kanal und zwar insofern, als der orthodontische Bogen im Wesentlichen in der Mitte des Kanals, wo sich die beiden Nuten befinden, nicht an der Seitenwand des Kanals anliegt, sondern nur im Endbereich des Kanals mit dem Kanal in Kontakt kommt. Hierbei ist von Vorteil, wenn der Kanal einen größeren Querschnitt aufweist, als der orthodontische Bogen, damit sich der orthodontische Bogen im Kanal ausrichten kann. Gleiches gilt auch für den Fall, dass die Schlitze verschwenkt oder versetzt zueinander in den entsprechenden Wandabschnitten der Kappe angeordnet sind.

Nach einem weiteren Merkmal der Erfindung ist vorgesehen, dass auf der dem Träger zugewandten Seite der Kappe im Wesentlichen quer zur Längsachse des orthodontischen Bogens ein auf den orthodontischen Bogen wirkendes Druckstück angeordnet ist. Hierdurch kann erreicht werden, dass bei Zähnen, die nicht in einer Ebene zueinanderstehen, durch den Druck auf den orthodontischen Bogen im Bereich des Kanals eine Kraft senkrecht zur Oberseite des Zahns erzeugt wird, die bewirkt, dass die Stellung der Zähne relativ zueinander vermittelt wird, mit der Folge, dass nach einer solchen Behandlung die Zähne alle in gleicher Ebene zueinander ausgerichtet sind. Das heißt, die Nuten in der Seitenwand des Kanals haben zwei Aufgaben: Zum einen sollen diese die Friktion vermindern, die entsteht, wenn der orthodontische Bogen zwischen zwei Zähnen einen im Wesentlichen V-förmigen Verlauf aufweist, um die Zähne relativ zueinander in gleicher Höhe auszurichten, er dient allerdings auch dazu, mittels eines auf in der Innenseite in der Kappe angeordneten Druckstückes die aus dem Bracket austretenden Seitenenden des Bogens in Richtung von der Oberfläche der Zähne weg mit einer Kraft zu beaufschlagen, um versetzt zueinander ausgerichtete Zähne in eine Ebene zu verschieben. Das Druckstück, das in die Kappe einsetzbar ist, kann beispielsweise als Feder ausgebildet sein, insbesondere als Blattfeder, es kann aber auch als im Wesentlichen starre Traverse ausgebildet sein, das heißt, dass das Druckstück als Traverse mit vorgegebener Kraft auf den orthodontischen Bogen einwirkt. Die Verwendung einer Feder als Druckstück hat den Vorteil, dass die ausgeübte Kraft auf den orthodontischen Bogen im Wesentlichen immer gleichbleibend ist. Dies deshalb, da die Feder bei einer Verformung des Bogens dieser Verformung nachfolgt.

Es wurde bereits zu eingangs darauf hingewiesen, dass die Kappe auf der Oberseite eine Einrichtung zur Aufnahme z. B. einer Drahtligatur und/oder einer Gummikette aufweist. Hierzu ist im Einzelnen vorgesehen, dass die Kappe auf ihrer Oberseite mindestens eine Zunge zur Aufnahme einer solchen Drahtligatur und/oder einer Gummikette besitzt. Vorteilhaft ist insbesondere die Zunge im Wesentlichen oberflächengleich in der Kappe angeordnet bzw. eingelassen. Das heißt, dass die Oberfläche der Kappe im Wesentlichen glatt ist. Essensreste können sich somit auf der Kappe kaum verfangen, was vorteilhaft in Bezug auf die Mundhygiene ist. Darüber hinaus hat eine solche Kappe allerdings auch ästhetische Vorteile, indem sie nämlich bei entsprechender Farbgestaltung, insbesondere in Abstimmung mit der Farbe des Zahnes nur noch geringfügig auffällt, was die Akzeptanz solcher Brackets zur Korrektur der Zahnstellung im Kiefer bei den Patienten erhöht.

In Bezug auf die Anordnung der mindestens einen Zunge ist darüber hinaus vorgesehen, dass diese im Wesentlichen über dem entsprechenden Schlitz zur Führung des orthodontischen Bogens in der Kappe angeordnet ist. Vorteilhaft ist nicht nur eine Zunge in der Kappe angeordnet, sondern zu jeder Seite der Kappe im Bereich oberhalb des mindestens einen Schlitzes eine solche Zunge. Hieraus wird deutlich, dass mithilfe einer solchen Kappe, durch den auf dem Zahn angeordneten Träger der Zahn mit den jeweils benachbarten Zähnen verblockt werden kann. Auch besteht durch die Zungen die Möglichkeit der Anordnung jeweils einer Gummikette an einer jeden Zunge, um so die benachbarten Zähne jeweils an den entsprechenden Zahn oder die verblockten Zähne heranziehen zu können, um unterschiedlich breite Längsspalte zwischen den Zähnen zu vermitteln.

Die Kappe ist, wie dies bereits erläutert worden ist, auf dem Träger fixierbar. Im Einzelnen ist in diesem Zusammenhang vorgesehen, dass die Kappe mit dem Träger lösbar verrastend verbindbar ist. Das heißt, dass die Kappe auf den Träger insbesondere aufclipsbar ist. Hierzu ist im Einzelnen vorgesehen, dass die Seitenwände des Trägers die insbesondere den Kanal bilden nach außen gerichtet jeweils einen Hinterschnitt aufweisen, wobei korrespondierend hierzu die Kappe zwei Wülste aufweist, die in den jeweiligen Hinterschnitt einschnappen, und so für eine clipsbare Verbindung zwischen Kappe einerseits und Träger andererseits sorgen. Grundsätzlich sind allerdings auch andere Verbindungsarten möglich. Es muss lediglich sichergestellt sein, dass die Kappe derart stabil auf dem Träger aufsitzt, dass sie die entsprechenden Kräfte mit dem orthodontischen Bogen auf den Träger übertragen kann.

Vorteilhaft sitzt die Kappe bündig auf dem Träger auf, das heißt, dass die Kappe mit dem Außenrand des Trägers bündig abschließt. Im Bereich des Übergangs zwischen dem Träger einerseits und der Kappe andererseits ist zu einer vorzugsweise zu beiden Seiten des Brackets jeweils ein keilförmiger Spreizschlitz vorgesehen, um die Kappe im aufgeclipsten Zustand der Kappe auf dem Träger durch ein geeignetes Werkzeug abheben zu können.

Anhand der Zeichnungen wird die Erfindung nachstehend beispielhaft näher erläutert.
- Fig. 1: zeigt schematisch die Anordnung der erfindungsgemäßen Brackets auf der Oberseite von Zähnen;
- Fig. 2: zeigt in perspektivischer Darstellung das Bracket einschließlich des orthodontischen Bogens;
- Fig. 3: zeigt ebenfalls perspektivisch die Kappe und den Träger jeweils in gesonderter Darstellung;
- Fig. 4: zeigt eine Ansicht von oben auf die Kappe;
- Fig. 4a: zeigt eine Ansicht von unten auf die Kappe;
- Fig. 5: zeigt eine Ansicht von oben auf den Träger;
- Fig. 6: zeigt das Bracket in einer Seitenansicht;
- Fig. 7: zeigt das Bracket in einer Seitenansicht im Schnitt;
- Fig. 7a: zeigt die Einzelheit VIIa aus Fig. 7;

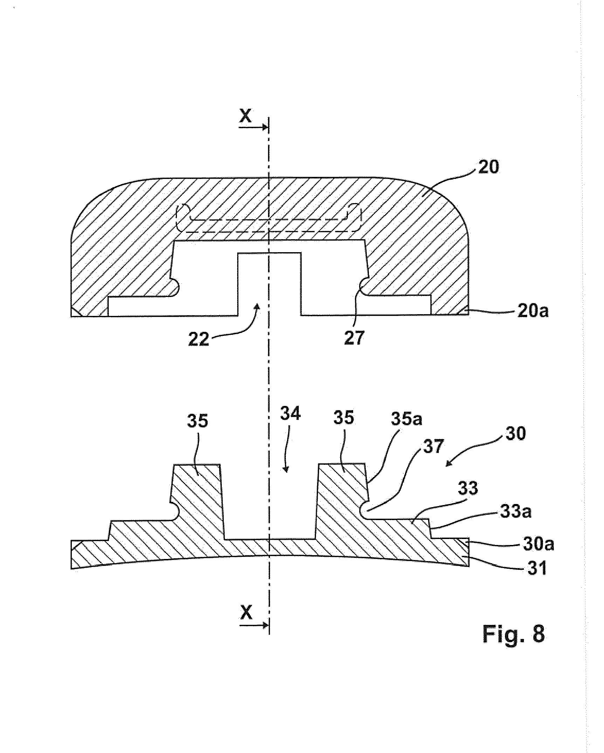

- Fig. 8: zeigt jeweils eine vergrößerte Schnittdarstellung der Kappe und des Trägers;

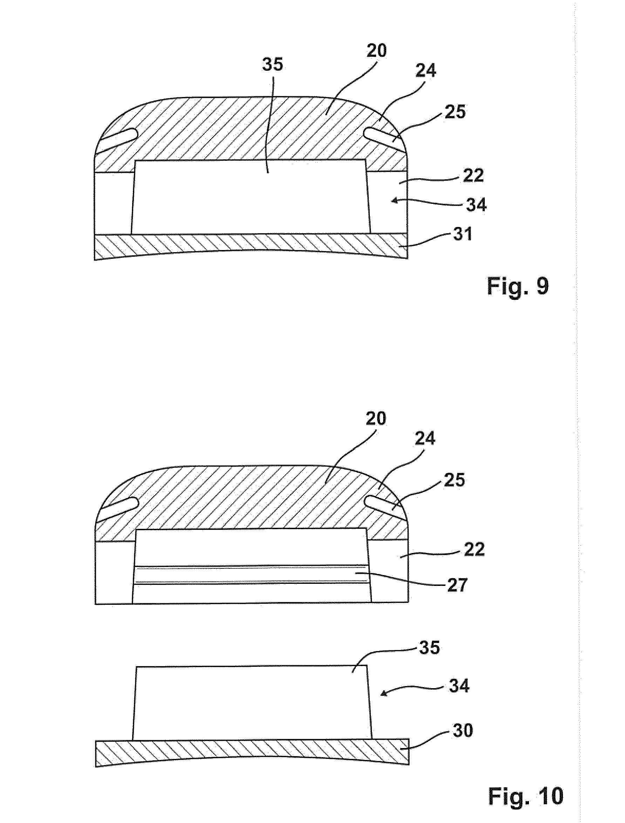

- Fig. 9: zeigt einen Schnitt gemäß der Linie IX-IX aus Fig. 4;
- Fig. 10: zeigt einen Schnitt gemäß der Linie X-X aus Fig. 8;
- Fig. 11 und Fig. 12: zeigen jeweils eine Darstellung mit in dem Wandabschnitt der Kappe verschwenktem Schlitz;
- Fig. 13: zeigt eine Seitenansicht auf ein Bracket, wobei in der Kappe die Schlitze seitlich versetzt zueinander angeordnet sind;
- Fig. 14: zeigt perspektivisch eine Ansicht auf den Träger und die Kappe eines Brackets, wobei in den Seitenwänden des Kanals des Trägers jeweils ein quer zur Längsachse des Kanals verlaufender Schlitz vorgesehen ist;
- Fig. 15: zeigt eine explosionsartige Schnittdarstellung von Kappe und Träger, wobei eine Blattfeder vorgesehen ist, die in die Kappe einsetzbar ist;
- Fig. 16: zeigt eine Ansicht von unten auf die Kappe mit einsitzender Blattfeder;
- Fig. 17: zeigt eine Darstellung gemäß Fig. 15, wobei jedoch anstelle der Blattfeder eine Traverse zur Aufnahme durch die Kappe vorgesehen ist;
- Fig. 18: zeigt eine Ansicht von unten auf die Kappe bei einsitzender Traverse;
- Fig. 19a: zeigt den Träger in einer Ansicht von der Kappenseite her;
- Fig. 19b: zeigt perspektivisch die Kappe mit einem durchgehenden Schlitz, in einer Ansicht von unten.

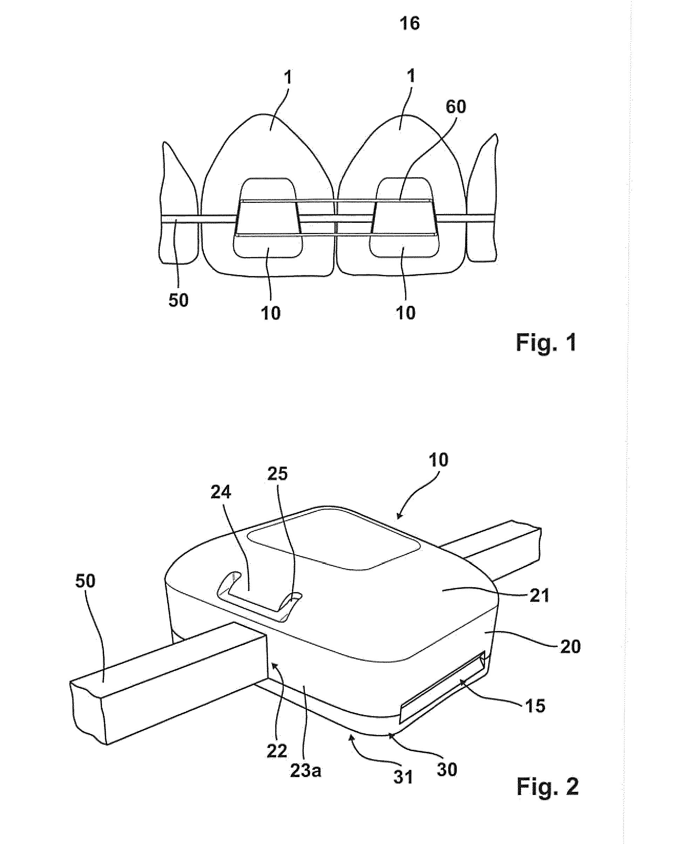

Fig. 1 zeigt schematisch einen Teil eines Gebisses mit Zähnen 1, wobei auf den Zähnen 1 jeweils ein Bracket 10 angeordnet ist. Die beiden Brackets 10 nehmen zum einen den orthodontischen Bogen 50 auf und sind darüber hinaus durch die mit 60 bezeichnete Drahtligatur verbunden.

Betrachtet man nunmehr Fig. 2 so erkennt man das Bracket 10 in vergrößerter perspektivischer Darstellung. Das Bracket 10 umfasst die Kappe 20, die auf dem Träger 30 fixiert aufsitzt. Die Kappe 20 und der Träger 30 schließen hierbei bündig miteinander ab, um eine möglichst glatte Oberfläche zu erzielen. Die Kappe 20 weist in ihren einander gegenüberliegenden Wandabschnitten 23a jeweils einen zum Träger hin offenen Schlitz 22 zur Aufnahme und Führung des mit 50 bezeichneten orthodontischen Bogens auf. Das heißt, der Schlitz 22 ist in der Ansicht U-förmig oder nach Art einer Türöffnung ausgebildet. Auf der Oberseite der Kappe 20 ist die Zunge 24 erkennbar, die zusammen mit der Kappe 20 auf der Oberseite 21 der Kappe einen Einschnitt 25 zur Aufnahme einer Drahtligatur 60 (siehe Fig. 1) oder einer Gummikette (nicht dargestellt) bildet. Die Zunge 24 mit dem Einschnitt 25 befindet sich unmittelbar oberhalb des Schlitzes 22 im jeweiligen Wandabschnitt 23a der Kappe 20. Der Träger 30 besitzt den Trägerboden 31, der auf seiner Unterseite in zwei Raumrichtungen gewölbt ausgebildet ist, um eine möglichst große Oberfläche zur klebenden Verbindung mit der Oberseite des Zahnes bereitzustellen.

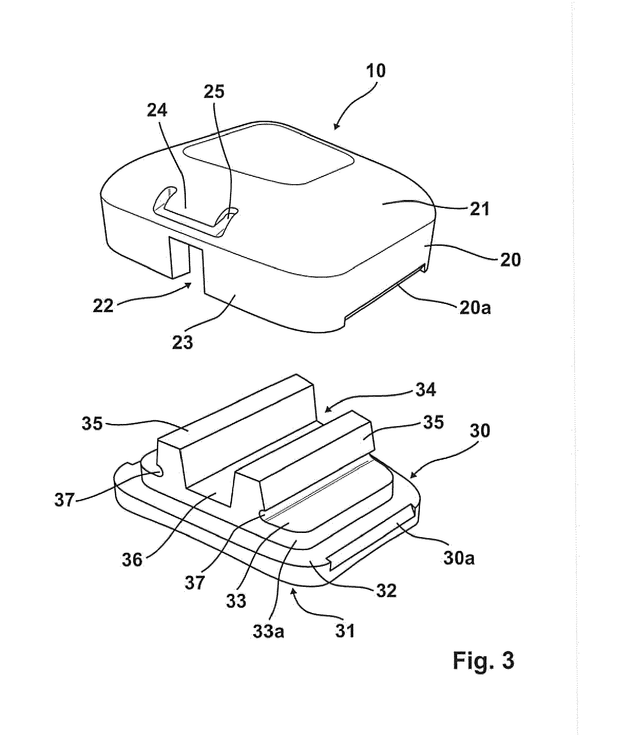

Aus der Darstellung gemäß Fig. 3 ist insbesondere die Ausbildung des mit 30 bezeichneten Trägers erkennbar. Der Träger 30 weist, wie ausgeführt, den Trägerboden 31 auf, auf dem unter Bildung eines Randes 32 der Aufsatzboden 33 angeordnet ist. Der Aufsatzboden 33 zeigt den insgesamt mit 34 bezeichneten Kanal, der die beiden Seitenwände 35 umfasst, die auf den Kanalboden 36 konisch zulaufend ausgebildet sind. In dem Kanal 34 lagert der orthodontische Bogen 50 (siehe Fig. 2).

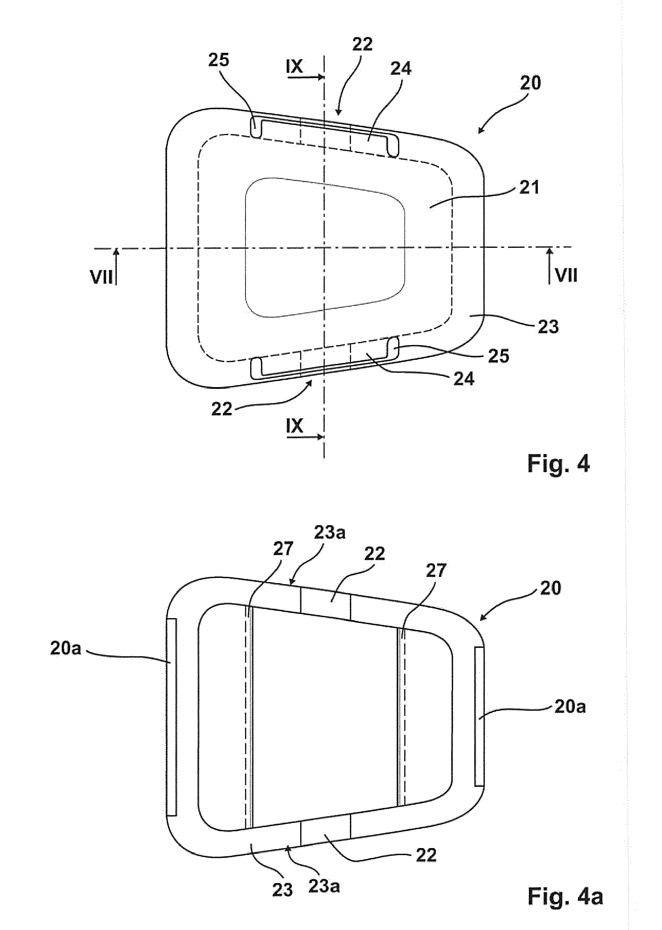

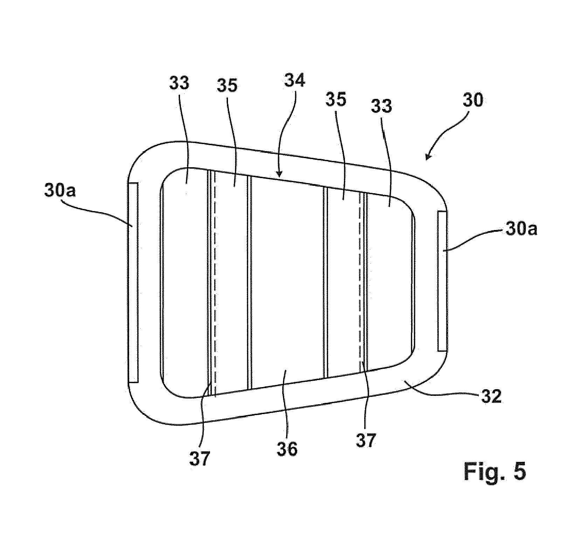

Im Übergangsbereich zwischen der Kappe 20 und dem Träger 30 sind jeweils im Träger und in der Kappe eine Schräge 20a, 30a zur Bildung eines Spreizschlitzes 15 angeordnet. Figuren 4, 4a, 5 zeigen die Kappe und den Träger in unterschiedlichen Ansichten; erkennbar ist an der Kappe 20 der insbesondere umlaufende Rand 23 mit den einander gegenüberliegenden Wandabschnitten 23a, in denen die Schlitze 22 angeordnet sind. Der Rand 23 korrespondiert in der Größe mit dem Rand 32 des Trägers. Das heißt, dadurch, dass die Kappe 20 mit ihrem Rand 23 auf dem Rand 32 des Trägers aufsitzt und hierbei mit ihrer Wand an dem Absatz oder Bund 33a des Aufsatzbodens 33 anliegt, wird die Kraftübertragung von der Kappe auf den Träger ermöglicht. Das heißt, es besteht in der Ebene des Trägers und der Kappe Formschluss.

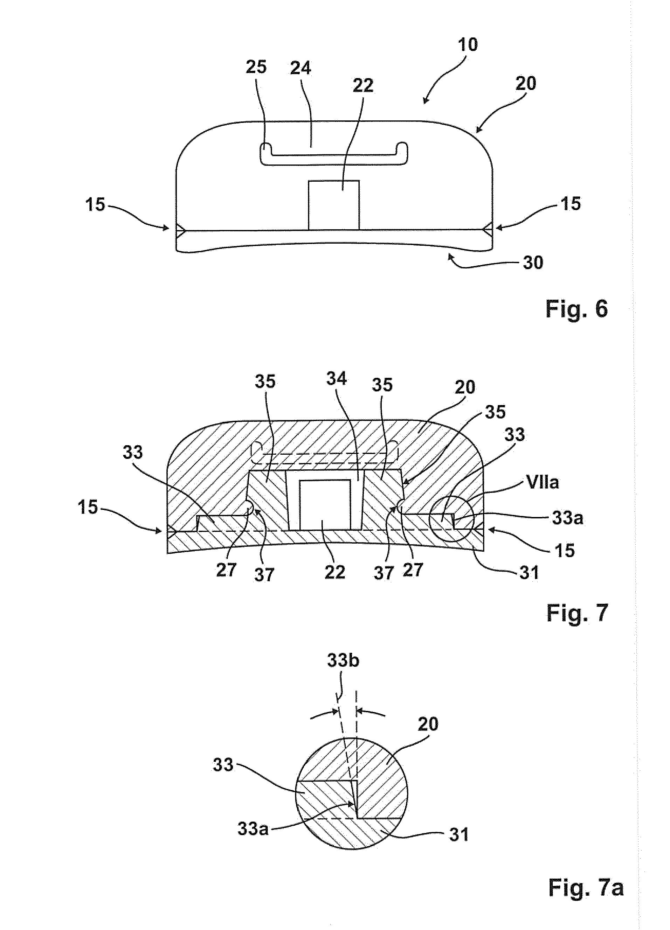

Betrachtet man nunmehr die Figuren 7 folgende, so wird die Verrastung zwischen der Kappe 20 einerseits und dem Träger 30 andererseits erkennbar. Hierzu sind die Seitenwände 35 des Kanals 34 des Trägers 30 jeweils mit einem Hinterschnitt 37 versehen, wobei korrespondierend zu dem Hinterschnitt 37 die Kappe 20 einen Wulst 27 auf jeder Seite der Seitenwände 35 aufweist, die eine Schnapp- oder Clipverbindung zwischen der Kappe 20 und dem Träger 30 bewirken. Die Seitenwand 35 zeigt eine Einlaufschräge 35a, wobei korrespondierend zu der Einlaufschräge 35a der Aufsatzboden 33 des Absatzes 33a eine Einlaufschräge 33b aufweist, wobei der Winkel zwischen der Einlaufschräge 35a und der Einlaufschräge 33b des Absatzes 33a des Aufsatzbodens 33 im Wesentlichen gleich ist. Die Einlaufschräge 35a und die Einlaufschräge 33b sind deshalb erforderlich, um ein winkliges Aufsetzen und Zuklappen der Kappe 20 auf den Träger 30 zu ermöglichen.

Fig. 6 zeigt ein Bracket 10 mit einer Kappe 20, wobei der Schlitz 22 im jeweiligen Wandbereich 23a neutral angeordnet ist; das heißt, die Schlitze sind zueinander fluchtend in den Wandabschnitten 23a angeordnet.

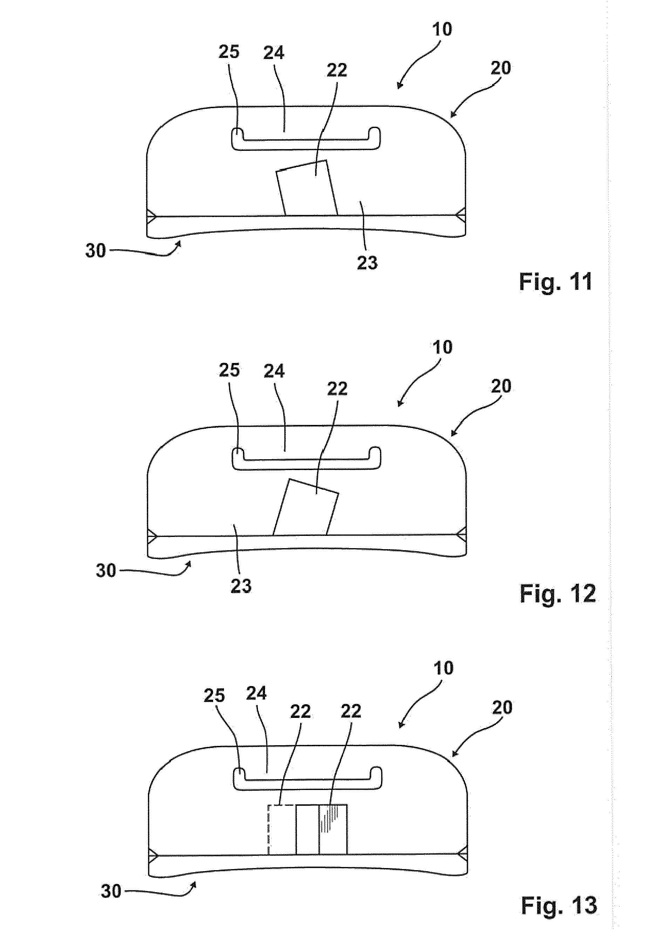

Betrachtet man nunmehr die Figuren 11 und 12 so erkennt man einen zu beiden Seiten der Kappe angeordneten verschwenkten Schlitz 22 , mit deren Hilfe eine Torque-Beanspruchung auf den orthodontischen Bogen 50 bzw. den Träger 30 aufgebracht werden kann. Es ist hierbei aber durchaus denkbar, dass der Schlitz 22 in dem jeweiligen Wandabschnitt 23a auf jeder Seite in unterschiedlicher Richtung verschwenkt ist. Zur Angulation kann allerdings auch vorgesehen sein, den Schlitz 22 in dem einen Wandbereich 23a seitlich versetzt zu dem Schlitz im anderen Wandbereich anzuordnen. Das heißt, die Schlitze 22 sind dann nicht fluchtend zueinander in den Wandabschnitten 23a der Kappe 20 angeordnet. Bei der Angulation werden die Zähne um eine gedachte horizontale Achse senkrecht zur Zahnoberseite von einer Schrägstellung in eine Geradestellung überführt (Fig. 13). Denkbar ist in diesem Zusammenhang ebenfalls, die Schlitze 22 sowohl versetzt als auch verschwenkt an dem jeweiligen Wandabschnitt 23a anzuordnen.

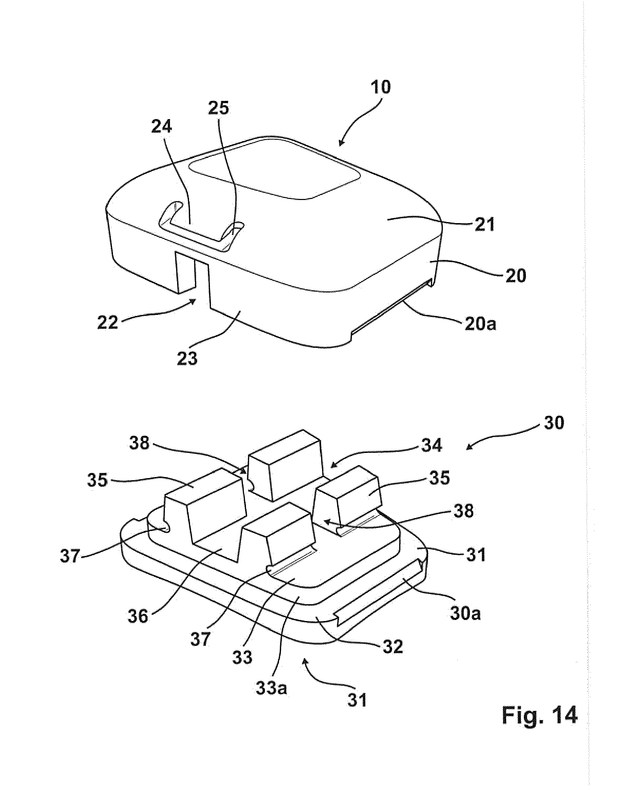

Die Fig. 14 zeigt eine spezielle Ausgestaltung des Trägers 30 mit den beiden Seitenwänden 35, wobei die Seitenwände 35 jeweils durch eine Nut 38 geteilt sind. Hierdurch wird erreicht, dass bei einer im Wesentlichen V-förmigen Einlage des orthodontischen Bogens in dem Kanal 34 die Friktion des Bogens an den Seitenwänden des Kanals vermindert wird, und zwar dadurch, dass im Scheitelbereich der V-förmigen Anordnung des orthodontischen Bogens im Kanal 34 der orthodontische Bogen dort frei liegt, er somit lediglich im Randbereich der Seitenwände 35 an diesen anliegt.

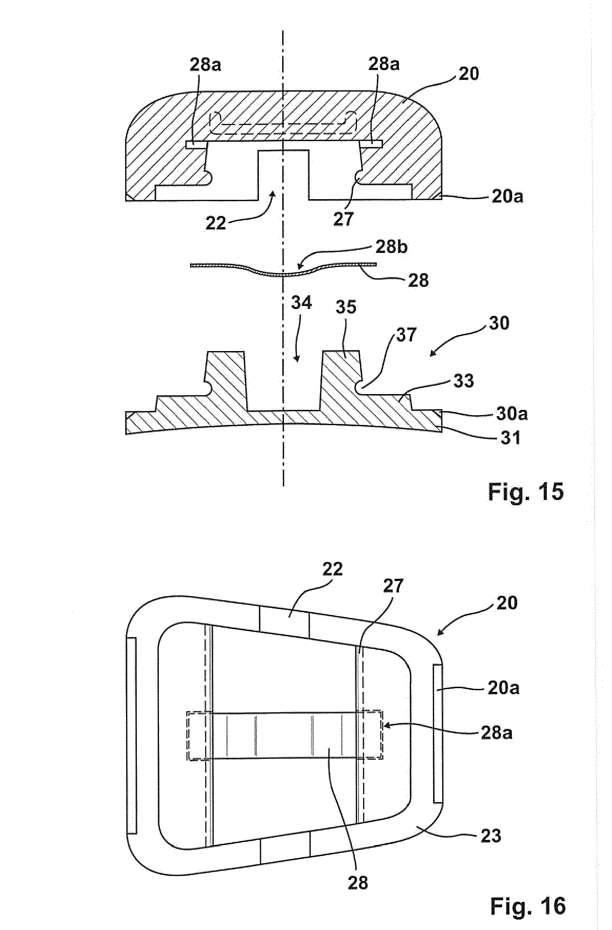

Die Figuren 15 und 16 zeigen eine Ausführungsform, bei der auf der Unterseite oder Innenseite der Kappe 20 eine Blattfeder 28 angeordnet ist. Hierzu besitzt die Kappe 20 auf der Unterseite zu beiden Seiten des Gehäuses eine Blattfederaufnahme 28a. Mittels eines geeigneten Werkzeuges wird die Blattfeder in diese Blattfederaufnahme 28a eingesetzt. Mit ihrer Wölbung 28b drückt die Blattfeder dann auf den in dem Kanal 34 einliegenden orthodontischen Bogen 50.

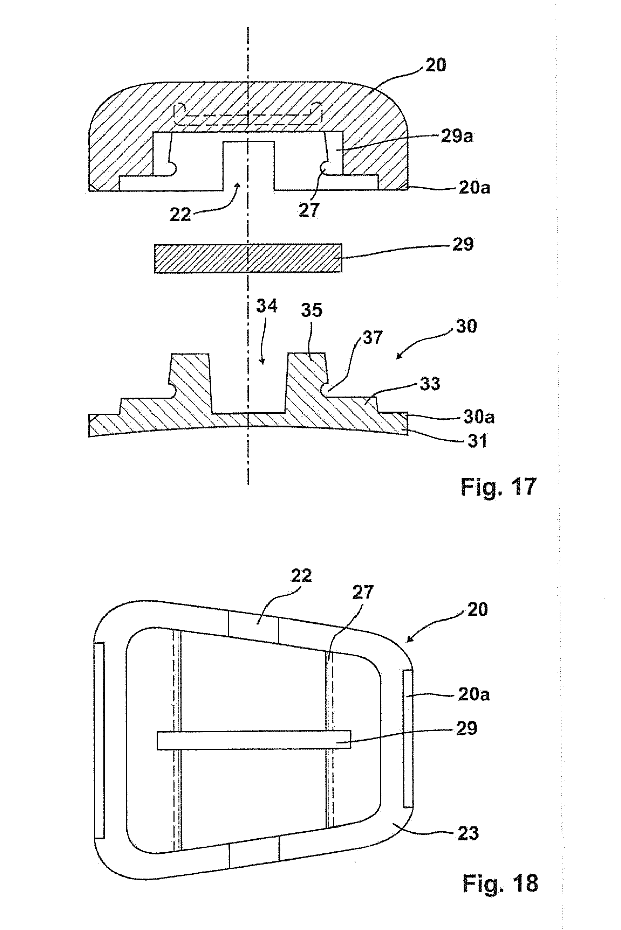

Wie sich aus den Figuren 17 und 18 ergibt, kann anstelle der Blattfeder 28 auch eine Traverse 29 vorgesehen sein, wobei die Traverse 29 durch eine Schlitzaufnahme 29a auf der Innenseite der Kappe 20 einschiebbar aufnehmbar ist. Die Höhe der Traverse 29 ist hierbei so bemessen, dass diese mit einem bestimmten Druck auf den orthodontischen Bogen drückt. Hierdurch erfährt der orthodontische Bogen bei Austritt aus dem Bracket eine Ausrichtung in Richtung auf die Oberseite der Kappe 20. Das heißt, dass hierdurch bei versetzt zueinander stehenden Zähne diese in eine Ebene gebracht werden können.

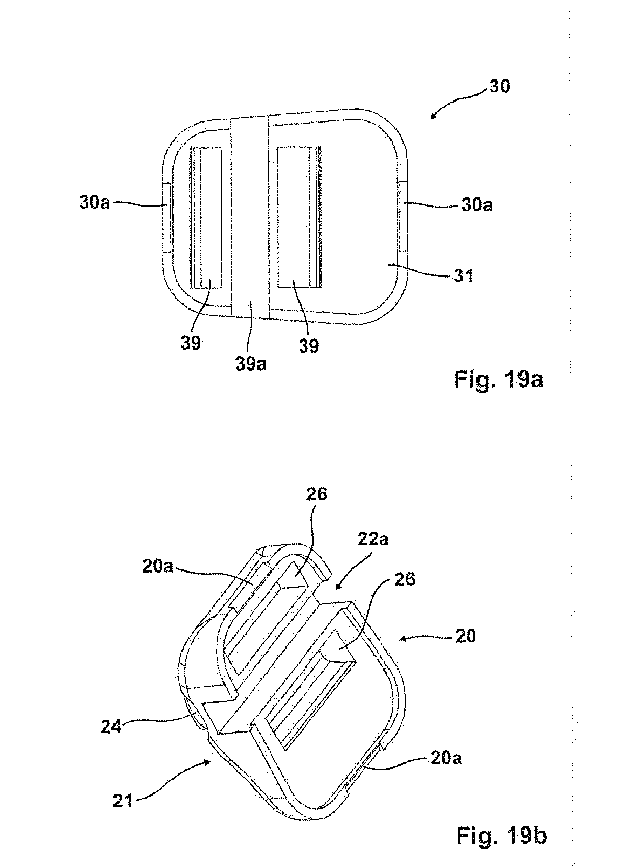

Figuren 19a, 19b zeigen eine Ausführungsform, bei der die Kappe 20 einen durchgehenden Schlitz 22a zur Aufnahme des orthodontischen Bogens zeigt. Die Kappe 20 weist darüber hinaus zu beiden Seiten des Schlitzes 22a zur clipsbaren Verbindung mit entsprechenden Vorsprüngen 39 des Trägers 30 Ausnehmungen 26 auf. Die Vorsprünge 39 sind demzufolge unter Bildung einer Clipsverbindung in die Ausnehmungen 26 eindrückbar.

Zwischen den Vorsprüngen 39 des Trägers 30 ist eine Ebene 39a vorgesehen, die mit der Grundfläche des Schlitzes 22a in Bezug auf die Größe korrespondiert.

Der Schlitz 22a kann darüber hinaus, wie auch die Schlitze 22 in den Figuren 11 und 12, schräg stehend verlaufen. Vorgesehen kann ebenfalls sein, den Schlitz 22a in seinem Verlauf von einem zum anderen Ende zu versetzen; das heißt, der Schlitz 22a würde eine Stufe über seine Länge aufweisen. Im Übrigen weist die Kappe bei dieser Ausführungsform auf ihrer Oberseite 21 mindestens eine vorzugsweise zwei Zungen 24 zur Aufnahme einer Drahtligatur 60 oder einer Gummikette auf.

Im Übrigen gilt, dass wenn soweit nichts anderes vermerkt ist, die Kappe 20 und der Träger vergleichbar zu der Kappe und dem Träger der übrigen Figuren ausgebildet sind.

### Bezugszeichenliste:

- 1: Zahn
- 10: Bracket
- 15: Spreizschlitz
- 20: Kappe
- 20a: Schräge des Spreizschlitzes 15
- 21: Oberseite der Kappe
- 22: Schlitz
- 22a: Schlitz
- 23: Rand der Kappe
- 23a: Wandabschnitt
- 24: Zunge
- 25: Einschnitt
- 26: Ausnehmung
- 27: Wulst
- 28: Blattfeder
- 28a: Blattfederaufnahme
- 28b: Wölbung der Blattfeder
- 29: Traverse
- 29a: Schlitzaufnahme für Traverse
- 30: Träger
- 30a: Schräge des Spreizschlitzes 15
- 31: Trägerboden
- 32: Rand des Trägers
- 33: Aufsatzboden
- 33a: Absatz (Bund)
- 33b: Einlaufschräge des Absatzes
- 34: Kanal
- 35: Seitenwand
- 35a: Einlaufschräge der Seitenwand des Kanals
- 36: Kanalboden
- 37: Hinterschnitt
- 38: Nut in der Seitenwand des Trägers
- 39: Vorsprung
- 30a: Ebene
- 50: orthodontischer Bogen
- 60: Drahtligatur

## Patentansprüche

1. Bracket (10) umfassend einen auf einem Zahn eines Gebisses anordbaren Träger (30) sowie eine auf dem Träger (30) fixierbare Kappe (20), die mindestens einen Schlitz (22, 22a) zur Ausrichtung eines orthodontischen Bogens (50) und/oder eine Einrichtung zur Aufnahme einer Drahtligatur (60) und/oder einer Gummikette aufweist, wobei der mindestens eine Schlitz zum Träger (30) hin offen ist.

2. Bracket (10) nach Anspruch 1,
**dadurch gekennzeichnet,**
**dass** die Kappe (20) an zwei aneinander gegenüberliegenden Seiten der Kappe (20) angeordnete Schlitze (22) aufweist, wobei der Träger einen Kanal (34) aufweist, der auf die Schlitze (22) zu ausgerichtet ist.

3. Bracket (10) nach einem der voranstehenden Ansprüche,
**dadurch gekennzeichnet,**
**dass** der Kanal (34) zwei Seitenwände (35) und einen zwischen den Seitenwänden (35) befindlichen Kanalboden (36) aufweist.

4. Bracket (10) nach einem der voranstehenden Ansprüche,
**dadurch gekennzeichnet,**
**dass** der Kanal (34) in Richtung des Kanalbodens (36) zu konisch oder rechteckig zulaufend ausgebildet ist.

5. Bracket (10) nach Anspruch 3 oder 4,
**dadurch gekennzeichnet,**
**dass** der Kanalboden (36) eben ausgebildet ist.

6. Bracket (10) nach einem der Ansprüche 3 bis 5,
**dadurch gekennzeichnet,**
**dass** jede Seitenwand (35) des Kanals (34) jeweils mindestens eine Nut (38) aufweist, wobei die mindestens zwei Nuten (38) miteinander fluchten.

7. Bracket (10) nach einem der voranstehenden Ansprüche,
**dadurch gekennzeichnet,**
**dass** die Kappe (20) mindestens zwei einander gegenüberliegende Wandabschnitte (23) umfasst, die jeweils mindestens einen Schlitz (15) aufweisen, der vorteilhaft der Querschnittsform des orthodontischen Bogens (50) nachempfunden ist.

8. Bracket (10) nach Anspruch 7,
**dadurch gekennzeichnet,**
**dass** die beiden Schlitze (15) seitlich versetzt zueinander in Wandabschnitten (23) angeordnet sind.

9. Bracket (10) nach Anspruch 7 oder 8,
**dadurch gekennzeichnet,**
**dass** mindestens einer der beiden Schlitze (15) schrägstehend in dem Wandabschnitt (23) angeordnet ist.

10. Bracket (10) nach einem der voranstehenden Ansprüche,
**dadurch gekennzeichnet,**
**dass** auf der dem Träger (30) zugewandten Seite der Kappe (20) im Wesentlichen quer zur Längsachse des orthodontischen Bogens (50) ein auf den orthodontischen Bogen (50) wirkendes Druckstück angeordnet ist.

11. Bracket (10) nach Anspruch 10,
**dadurch gekennzeichnet,**
**dass** das Druckstück in die Kappe (20) einsetzbar ist.

12. Bracket (10) nach einem der voranstehenden Ansprüche 10 oder 11, **dadurch gekennzeichnet,**
**dass** das Druckstück als Feder (28) ausgebildet ist.

13. Bracket (10) nach einem der Ansprüche 10 oder 11,
**dadurch gekennzeichnet,**
**dass** das Druckstück als Traverse (29) ausgebildet ist.

14. Bracket (10) nach einem der voranstehenden Ansprüche,
**dadurch gekennzeichnet,**
**dass** die Kappe (20) auf ihrer Oberseite (21) mindestens eine Zunge zur Aufnahme einer Drahtligatur (60) und/oder einer Gummikette aufweist.

15. Bracket (10) nach Anspruch 14,
**dadurch gekennzeichnet,**
**dass** die Zunge (24) im Wesentlichen oberflächengleich in der Kappe (20) angeordnet ist.

16. Bracket (10) nach einem der Ansprüche 14 oder 15,
**dadurch gekennzeichnet,**
**dass** die Zunge (24) im Wesentlichen über den Schlitzen (22) angeordnet ist.

17. Bracket (10) nach einem der voranstehenden Ansprüche,
**dadurch gekennzeichnet,**
**dass** die Kappe (20) mit dem Träger (30) lösbar verrastend verbindbar ist.

18. Bracket (10) nach einem der voranstehenden Ansprüche,
**dadurch gekennzeichnet,**
**dass** die Kappe (20) einen durchgehenden Schlitz (22a) aufweist.
